# EUROPÄISCHE PATENTSCHRIFT

(11) **EP 3 789 182 B1**
(45) Veröffentlichungstag und Bekanntmachung des Hinweises auf die Patenterteilung: **02.04.2025**
(21) Anmeldenummer: 20194738.9
(22) Anmeldetag: 04.09.2020
(51) Int. Cl.: B29C 49/80, B29C 49/46, B29C 49/78, G01M 3/32, B29C 49/36, B29C 49/12, B29C 49/42, B29C 49/02, B29C 49/06, G01M 3/26, A61L 9/00

(54) **VORRICHTUNG ZUM UMFORMEN VON KUNSTSTOFFVORFORMLINGEN ZU KUNSTSTOFFBEHÄLTNISSEN MITTELS STATIONÄRER DRUCKLUFTZUFÜHRUNG**
DEVICE FOR REFORMING PLASTIC PRE-FORMS INTO PLASTIC CONTAINERS BY MEANS OF STATIONARY COMPRESSED AIR SUPPLY
DISPOSITIF DE FORMAGE DES PRÉFORMES EN MATIÈRE PLASTIQUE POUR RÉCIPIENTS EN MATIÈRE PLASTIQUE AU MOYEN D'UNE ALIMENTATION EN AIR COMPRIMÉ FIXE

(30) Priorität: 05.09.2019 DE 102019123795
(43) Veröffentlichungstag der Anmeldung: 10.03.2021
(73) Patentinhaber: Krones AG, 93073 Neutraubling (DE)
(72) Erfinder: Rauschendorfer, Thomas, 93073 Neutraubling (DE); Trauner, Christian, 93073 Neutraubling (DE)
(74) Vertreter: Hannke Bittner & Partner mbB Regensburg

(56) Entgegenhaltungen:
- EP-A1- 3 015 248
- EP-B1- 2 636 506
- EP-B1- 2 669 070
- EP-B1- 2 692 506
- CN-A- 105 415 649
- CN-A- 110 039 747
- DE-A1- 102010 025 745
- DE-A1- 102011 110 962
- DE-A1- 102013 019 892
- DE-A1- 102017 215 461
- DE-U1- 202015 106 917
- US-A1- 2016 107 368
- US-B2- 7 790 097
- US-B2- 8 889 057

## Beschreibung

Die vorliegende Erfindung bezieht sich auf eine Vorrichtung und ein Verfahren zur Umformung von Kunststoffvorformlingen zu Kunststoffbehältnissen.

Eine Vorrichtung nach dem Oberbegriff des Anspruchs 1 wird in EP 2 692 506 B1 offenbart.

Weitere relevante Vorrichtungen werden in DE 10 2011 110962 A1 , DE 10 2017 215461 A1, DE 20 2015 106917 U1, CN 110 039 747 A, CN 105 415 649 B, EP 2 692 506 B1, US 7 790 097 B2, US 2016/107368 A1, EP 3 015 248 A1, US 8 889 057 B2, EP 2 636 506 B1, DE 10 2010 025745 A1, EP 2 669 070 B1 und DE 10 2013 019892 offenbart.

Derartige Vorrichtungen und Verfahren sind aus dem Stand der Technik seit Langem bekannt. Hierbei werden erwärmte Kunststoffvorformlinge mittels Druckluft zu Kunststoffbehältnissen expandiert. Üblicherweise erfolgt dieser Umformungsvorgang während einer Bewegung der Kunststoffvorformlinge, beispielsweise während eines Transports mittels eines sogenannten Blasrads.

Die Druckluft wird üblicherweise durch eine stationäre Einrichtung zu Verfügung gestellt. Dabei müssen derartige Drucklufteinheiten unterschiedlichsten Anforderungen genügen. So kann einerseits ein unterschiedlicher Reinheitsgrad bei der Herstellung der Kunststoffbehältnisse erforderlich sein und so können unterschiedliche Filtereinrichtungen erforderlich sein, um die Anlage zu betreiben. Auch ist es möglich, dass in Abhängigkeit von herzustellenden Behältnissen unterschiedliche Druckniveaus Einsatz finden. Auch ist es möglich, dass beispielsweise in Abhängigkeit von einer Größe der zu betreibenden Anlage unterschiedliche Druckluftmengen zur Verfügung gestellt werden müssen.

Eine weitere Problematik tritt auf, wenn es in der jeweiligen Vorrichtung zu Fehlern, beispielsweise zu Leckagen, kommt. Im Stand der Technik ist keine Möglichkeit vorgesehen, in einfacher Weise derartige Leckagen ausfindig zu machen.

Eine weitere Aufgabe der vorliegenden Erfindung besteht daher darin, eine vereinfachte Möglichkeit zu schaffen, um in derartigen Vorrichtungen Leckage festzustellen bzw. aufzuspüren.

Diese Aufgaben werden erfindungsgemäß durch die Gegenstände der unabhängigen Patentanspruch 1 erreicht. Vorteilhafte Ausführungsformen und Weiterbildungen sind Gegenstand der Unteransprüche.

Eine Vorrichtung zum Umformen von Kunststoffvorformlingen zu Kunststoffbehältnissen weist wenigstens eine Umformungsstation auf, welche eine Blasform aufweist, innerhalb derer die Kunststoffvorformlinge durch Beaufschlagung mit einem fließfähigen und insbesondere gasförmigen Medium zu den Kunststoffbehältnissen und insbesondere Kunststoffflaschen umformbar sind. Weiterhin weist die Vorrichtung eine Beaufschlagungseinrichtung auf, welche die Kunststoffvorformlinge mit dem fließfähigen Medium beaufschlagt, wobei die Vorrichtung eine Druckluftversorgungseinrichtung aufweist, welche das fließfähige Medium zur Verfügung stellt und diese Druckluftversorgungseinrichtung stationär angeordnet ist.

Erfindungsgemäß ist die Druckluftversorgungseinrichtung als eine modular aufgebaute Einrichtung aufgebaut, welche eine Be- und/ oder Entlüftungseinrichtung für Hochdruckluft aufweist, wobei diese modular aufgebaute Einrichtung je nach Anwendung mit weiteren Versorgungskomponenten bestückbar ist.

Bei dieser erfindungsgemäßen Ausgestaltung wird daher ein modularer Aufbau der Druckluftvesorgungseinrichtung vorgeschlagen. Im Gegensatz zum Stand der Technik, in dem diese Versorgungseinrichtungen jeweils einheitlich aufgebaut sind und nicht nach Anwendungsfall modifiziert werden können, erlaubt die hier beschriebene modular aufgebaute Einheit eine Versorgung der jeweiligen Vorrichtung bzw. auch der Beaufschlagungseinrichtung je nach dem Anwendungsfall.

Die vorliegende Offenbarung ist weiterhin auf eine Vorrichtung zum Umformen von Kunststoffvorformlingen zu Kunststoffbehältnissen gerichtet, die wenigstens eine Umformungsstation aufweist, welche eine Blasform aufweist, innerhalb derer die Kunststoffvorformlinge durch Beaufschlagung mit einem fließfähigen und insbesondere gasförmigen Medium zu den Kunststoffbehältnissen umformbar sind und die weiterhin eine Beaufschlagungseinrichtung aufweist, welche die Kunststoffvorformlinge mit dem fließfähigen Medium beaufschlagt, wobei die Vorrichtung eine Druckluftversorgungseinrichtung aufweist, welche das fließfähige Medium zur Verfügung stellt und diese Druckluftversorgungseinrichtung stationär angeordnet ist.

Bei einer Ausgestaltung weist die Druckluftversorgungseinrichtung eine Leckageerkennungseinrichtung auf, welche dazu geeignet und bestimmt ist, Leckagen in der Druckluftversorgung der Vorrichtung zu ermitteln.

Es wird jedoch darauf hingewiesen, dass die hier beschriebenen Ausgestaltungen auch miteinander kombiniert sein können.

Bei einer weiteren vorteilhaften Ausführungsform weist die Vorrichtung einen bewegbaren und drehbaren Träger auf, an dem die wenigstens eine Umformungsstatior angeordnet ist. Bei einer weiteren bevorzugten Ausführungsform weist die Vorrichtung eine Vielzahl von Umformungsstationen auf, die insbesondere an dem besagten drehbaren Träger angeordnet sind. Besonders bevorzugt transportiert der Träger die Umformungsstationen entlang eines kreisförmigen Pfades.

Bei der beanspruchten Ausführungsform handelt es sich bei der Beaufschlagungseinrichtung um eine Blasdüse bzw. die Beaufschlagungseinrichtung weist eine Blasdüse auf, welche an eine Mündung der Kunststoffvorformlinge ansetzbar ist, um diese so mit dem gasförmigen Medium zu beaufschlagen.

Bevorzugt weist die Blasform mehrere Blasformteile auf, die zum Öffnen und Schließen der Blasform bezüglich einander bewegbar sind, beispielsweise schwenkbar sind. Besonders bevorzugt sind diese Blasformteile jeweils an Blasformträgerteilen angeordnet.

Bei einer weiteren bevorzugten Ausführungsform weist die Umformungsstation eine Dehneinrichtung auf und insbesondere einen stangenartigen Körper, der in die Kunststoffvorformlinge einführbar ist, um diese in ihrer Längsrichtung zu dehnen.

Bei einer weiteren bevorzugten Ausführungsform weist die Vorrichtung wenigstens ein auf dem bewegbaren und insbesondere drehbaren Träger angeordnetes Druckluftreservoir auf. Bevorzugt kann dieses Druckluftreservoir von der oben erwähnten Druckluftversorgungseinrichtung versorgt werden. Bei einer bevorzugten Ausführungsform ist dieses Druckluftreservoir als Kanal und insbesondere als Ringkanal ausgebildet. Besonders bevorzugt ist dieses Druckluftreservoir dazu geeignet und bestimmt, mehrere Umformungsstationen mit dem gasförmigen Medium zu versorgen.

Bei einer bevorzugten Ausführungsform weist die Vorrichtung wenigstens eine Verteileinrichtung auf, welche die von der Druckluftversorgungseinrichtung stammende Luft auf die einzelnen Umformungsstationen verteilt. Bei dieser Verteileinrichtung kann es sich besonders bevorzugt um einen sogenannten Drehverteiler handeln, der dazu geeignet und bestimmt ist, von einer stationären Quelle, hier der Druckluftversorgungseinrichtung die Druckluft auf die einzelnen Umformungsstationen zu verteilen.

Bei einer bevorzugten Ausführungsform weist die Vorrichtung wenigstens zwei Zuführleitungen auf, welche die Druckluft dem besagten Drehverteiler und insbesondere den besagten Reservoirs zur Verfügung stellt.

Dabei kann es sich bei einer der Druckluftleitungen bzw. Zuführleitungen um eine Hochdruckluftleitung handeln und bei der anderen um eine Niederdruckleitung.

Unter einem hohen Druck wird im Rahmen der vorliegenden Erfindung ein Druck verstanden, der größer ist als 20 bar, bevorzugt größer als 30 bar und besonders bevorzugt größer als 35 bar. Besonders bevorzugt handelt es sich um einen Druck, der kleiner ist als 100 bar, bevorzugt kleiner als 80 bar, bevorzugt kleiner als 60 bar.

Unter einem Niedrigdruck wird ein Druck verstanden, der kleiner ist als 20 bar, bevorzugt kleiner als 15 bar, bevorzugt kleiner als 10 bar.

Bei einer weiteren bevorzugten Ausführungsform weist die Druckluftversorgungseinrichtung eine Vielzahl von Ventileinrichtungen zum Versorgen bzw. zum Betreiben der Druckluftversorgungseinrichtung auf. Bei einer weiteren bevorzugten Ausführungsform weist die Druckluftversorgungseinrichtung eine Druckluftzuführung auf, welche beispielsweise eine Verbindung mit einem Kompressor oder einer Hochdruckleitung darstellen kann.

Bei einer weiteren bevorzugten Ausführungsform weist die Druckluftversorgungseinrichtung auch eine Abführleitung auf, welche insbesondere Druckluft abführen kann und welche insbesondere mit der Vorrichtung zum Umformen von Kunststoffvorformlingen zu Kunststoffbehältnissen verbindbar ist.

Bei einer weiteren bevorzugten Ausführungsform sind die oben genannten Versorgungskomponenten aus einer Gruppe von Komponenten ausgewählt, welche insbesondere Feinfiltereinrichtungen, Aktivkohlefiltereinrichtung, Staubfiltereinrichtungen, Kondensatabscheider, Vorfiltereinrichtungen, Sterilfiltereinrichtungen aufweist.

Auch ist es möglich, dass diese genannten Komponenten in einer gewünschten Weise bzw. in einer bestimmten Reihenfolge zusammengeschaltet werden. So können beispielsweise unterschiedliche Filtereinrichtungen je nach den gewünschten Anforderungen zusammengeschaltet werden.

Zum Zusammenschalten der einzelnen Komponenten können dabei Elemente verwendet werden, die aus einer Gruppe von Elementen ausgewählt sind, welche O-Ringe, Zugstangen, Befestigungsklammern und der gleichen Enthält. Mittels derartiger Elemente kann eine Modularität hergestellt werden. Daneben können jedoch auch Schraubverbindungen, Steckverbindungen, Bajonettverbindungen und dergleichen verwendet werden.

Auch können unterschiedliche Komponenten an einen Bedarf der Maschine angepasst werden, beispielsweise an einen Druckluftbedarf. Dieser kann beispielsweise von der Anzahl der Umformungsstationen abhängen.

So ist es beispielsweise möglich, dass die Druckluftversorgungseinrichtung in einer einfachsten Ausführungsform eine Be- und Entlüftungseinheit der Hochdruckluft aufweist und einen integrierten Feinfilter. In einer weiteren Ausführungsform kann neben der Be- und Entlüftungseinheit der Hochdruckluft auch eine integrierte Vorfiltrationsbaugruppe vorgesehen sein.

Diese Be- und Entlüftungseinheit dient bevorzugt einerseits dazu, die Vorrichtung zum Umformen von Kunststoffbehältnissen mit Druckluft zu versorgen und andererseits bevorzugt auch dazu, Druckluft aufzunehmen.

In einer weiteren bevorzugten Ausführungsform können auch Sterilfilter und insbesondere autoklavierbare Sterilfilter vorgesehen sein. Auch diese können dabei in das modulare System integrierbar sein. Bevorzugt ist wenigstens ein Sterilfilter und sind bevorzugt mehrere und besonders alle Sterilfilter stromabwärts der Be- und Entlüftungseinheit angeordnet. Auf diese Weise wird erreicht, dass die Be- und Entlüftungseinheit selbst nicht steril ausgeführt zu werden braucht.

In einer weiteren Ausführungsform kann die Vorrichtung, wie unten genauer beschrieben, eine Niederdruckbeaufschlagungseinrichtung aufweisen, um Leckagen zu ordnen. Dabei können insbesondere Leckagen in dem Druckluftsystem einer Blasformmaschine bzw. der Vorrichtung zum Umformen der Kunststoffvorformlinge zu Kunststoffbehältnissen erkannt werden.

Bei einer weiteren bevorzugten Ausführungsform weist die Druckluftversorgungseinrichtung eine Dauerdruckluftversorgung für die Blasmaschine auf, um beispielsweise Ventileinrichtungen der Blasformmaschine zu schalten. Bei diesen Ventileinrichtungen kann es sich beispielsweise um pneumatisch betätigte Ventile handeln. Diese können mittels der Niederdruckdauerluftversorgung aktiv geschalten werden. Diese Dauerluftversorgung kann beispielsweise Druckluft mit einem Druck von 10 bar zur Verfügung stellen.

Bei einer weiteren bevorzugten Ausführungsform weist die Drucklufterzeugungseinrichtung eine Niedrigdruckluftversorgungeinrichtung auf, wie beispielsweise eine 10 bar Druckluftversorgungseinrichtung, welche auch aktiv zu- oder abgeschaltet werden kann.

Bei einer weiteren bevorzugten Ausführungsform ist ein Verbrauchsmesser in die Druckluftversorgungseinrichtung integriert. Dieser Verbrauchsmesser kann beispielsweise unmittelbar an dem Eingang der Druckluftversorgungseinrichtung angeordnet sein. Dieser Verbrauchsmesser kann jedoch auch in einem Rücklauf geschalten sein.

Bei einer weiteren bevorzugten Ausführungsform kann die Be- und Entlüftungseinheit der Hochdruckluft auf unterschiedliche maximale Volumenströme angelegt sein, beispielsweise auf einem Volumenstrom von 6200 Nm³/h. Auch ist es dabei möglich, dass Filterelemente und Filterglocken in unterschiedlichen Größen ausgelegt sein können. Diese können dabei Größen zwischen 1 und 3100 Nm³/h, beispielsweise bei einem Druck von 40 bar, aufweisen oder auch eine zweite Größe, die bis zu 6200 Nm³/h ebenfalls bei 40 bar erreicht.

Bei einer besonders bevorzugten Ausführungsform ist die hier beschriebene modulare Druckluftversorgungseinrichtung so aufgebaut, dass in die Be- und/ oder Entlüftungseinheit beispielsweise in eine Hochdruckbelüftungseinheit eine Filtration integriert ist und/ oder die Filtrationseinrichtung direkt an die Be- und/ oder Entlüftungseinheit montiert werden kann.

Dabei ist es möglich, dass die besagte Be- und Entlüftungseinheit der Hochdruckluft auf einen maximalen Volumenstrom ausgelegt ist, beispielsweise einen maximalen Volumenstrom von zwischen 5000 und 7000 Nm³/h und bei einem Druck zwischen 35 und 45 bar.

Je nach dem benötigten Luftvolumen können Filterelemente und Glocken in unterschiedlichen Größen verwendet werden. So kann beispielsweise eine erste Größe vorgesehen sein, die bis zu einem Volumen von 3500, bevorzugt 3100 m³/h bei einem Druck zwischen 35 und 45 bar geeignet ist und eine zweite Größe, die für ein Luftvolumen bis 6200 Nm³/h bevorzugt ebenfalls bei einem Druck zwischen 35 und 45 bar geeignet ist.

Bevorzugt ist jedoch eine spätere Umrüstung auf einen höheren Volumenstrom möglich.

Bei einer weiteren bevorzugten Ausführungsform weist die Vorrichtung wenigstens eine erste Filtereinrichtung und wenigstens eine zweite Filtereinrichtung auf. Dabei ist es möglich, dass diese Filtereinrichtungen hintereinander geschalten sind. Weiterhin können bevorzugt diese Filtereinrichtungen unterschiedliche Filtergrade aufweisen. So kann es sich beispielsweise bei der ersten Filtereinrichtung um eine Grobfiltereinrichtung und bei der zweiten Filtereinrichtung um eine Feinfiltereinrichtung handeln.

Bei einer weiteren vorteilhaften Ausführungsform weist die Vorrichtung eine Niederdruckluftversorgungseinheit auf. Diese kann wie oben erwähnt zum Schalten von Ventilen eingesetzt werden.

Bei einer weiteren vorteilhaften Ausführungsform ist diese Niederdruckluftversorgungseinheit aktivierbar und deaktivierbar. Dabei kann insbesondere diese Niederdruckluftversorgungseinheit unabhängig von der Be- und Entlüftungseinrichtung aktivierbar und deaktivierbar sein.

Bei einer weiteren vorteilhaften Ausführungsform weist die Druckluftversorgungseinrichtung eine Vielzahl von Ventileinrichtungen auf, wobei diese Ventileinrichtungen insbesondere Luftventileinrichtungen sind und besonders bevorzugt aus einer Gruppe von Ventileinrichtungen ausgewählt sind, welche Kolbenschieberventile, Sitzventile, Kugelhahnventile und dergleichen enthält.

Bei einer weiteren vorteilhaften Ausführungsform weist die Vorrichtung eine Überwachungseinrichtung zum Überwachen der Luftventileinrichtungen auf. So können beispielsweise analoge oder digitale Druckschalter Einsatz finden.

Bei einer weiteren bevorzugten Ausführungsform weist die Druckluftversorgungseinrichtung wenigstens einen Niederdruckanschluss auf. Bevorzugt ist dieser Niederdruckanschluss aktivierbar und deaktivierbar und insbesondere von der Be- und Entlüftungseinrichtung unabhängig aktivierbar und deaktivierbar.

Bei einer weiteren bevorzugten Ausführungsform ist die oben erwähnte Niederdruckluftversorgungseinrichtung mit der Druckluftversorgung der Vorrichtung verbindbar. Damit wird insbesondere eine Strömungstechnische Verbindung beschrieben.

Bei einer weiteren bevorzugten Ausführungsform weist die Leckageerkennungseinrichtung eine Druckanschlusseinrichtung auf, wobei diese Druckanschlusseinrichtung einen gegenüber einer Hauptdruckanschlusseinrichtung verkleinerten Querschnitt aufweist. Bevorzugt beträgt dieser verkleinerte Querschnitt weniger als 90 %, bevorzugt weniger als 80 %, bevorzugt weniger als 70 %, bevorzugt weniger als 60 % des Querschnitts der Hauptdruckanschlusseinrichtung.

Bei einer weiteren vorteilhaften Ausführungsform weist die Vorrichtung eine erste Druckluftzuführungseinrichtung und eine zweite Druckluftzuführungseinrichtung auf. Diese können wie oben erwähnt, unterschiedliche Drücke führen.

Vorteilhaft sind die beiden Druckluftzuführungseinrichtungen unabhängig voneinander regelbar. Besonders bevorzugt sind diese Druckluftzuführungseinrichtungen auch getrennt voneinander absperrbar.

Die vorliegende Offenbarung ist weiterhin auf ein Verfahren zum Betreiben einer Vorrichtung zum Umformen von Kunststoffvorformlingen zu Kunststoffbehältnissen gerichtet, wobei Kunststoffvorformlinge mit wenigstens einer Umformungsstation zu den Kunststoffbehältnissen umgeformt werden, wobei die Umformungsstation eine Blasform aufweist, innerhalb derer die Kunststoffvorformlinge durch Beaufschlagung mit dem fließförmigen bzw. fließfähigen Medium zu den Kunststoffbehältnissen umgeformt werden und wobei die Kunststoffvorformlinge mit einer Beaufschlagungseinrichtung mit dem fließfähigen Medium beaufschlagt werden, wobei mittels einer Druckluftversorgungseinrichtung das fließfähige Medium zur Verfügung gestellt wird und diese Druckluftversorgungseinrichtung stationär angeordnet ist. Weiterhin wird wenigstens zeitweise die Vorrichtung mit der Druckluftversorgungseinrichtung auf Leckagen hin überprüft.

Besonders bevorzugt erfolgt dieses Überprüfen auf Leckagen hin in einem Überprüfungsbetrieb, der sich von einem Produktionsbetrieb der Vorrichtung unterscheidet.

Besonders bevorzugt erfolgt die Überprüfung auf Leckagen mit einem Niederdruck, also insbesondere einem Druck, der unter 15 bar und bevorzugt unter 10 bar liegt.

Auf diese Weise ist eine Lokalisierung der Leckage möglich. Beispielsweise kann auf diese Weise herausgefunden werden, auf welcher Druckstufe eine Leckage auftritt. Nach dem Ermitteln der Druckstufe können weitere Leckageortungsschritte eingeleitet werden.

Weitere Vorteile und Ausführungsformen ergeben sich aus den beigefügten Figuren:
Darin zeigen:
- Fig. 1: eine schematische Darstellung einer Vorrichtung zum Umformen von Kunststoffvorformlingen zu Kunststoffbehältnissen;
- Fig. 2: eine Darstellung einer Druckversorgungseinrichtung in einer ersten Ausführungsform;
- Fig. 3: eine Darstellung einer Druckversorgungseinrichtung in einer weiteren Ausführungsform;
- Fig. 4: eine Darstellung einer Druckversorgungseinrichtung in einer weiteren erweiterten Ausführungsform; und
- Fig. 5: eine Darstellung eines Funktionsschemas einer Druckversorgungseinrichtung.

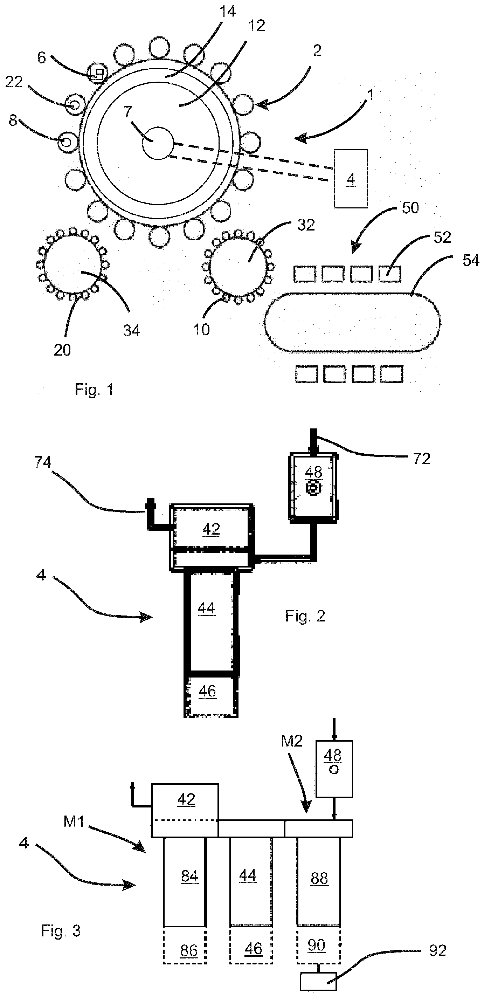

Figur 1 zeigt eine schematische Darstellung einer erfindungsgemäßen Vorrichtung zum Umformen von Kunststoffvorformlingen 10 zu Kunststoffbehältnissen 20. Dabei bezieht sich das Bezugszeichen 50 auf eine Erwärmungseinrichtung, welche die Kunststoffvorformlinge erwärmt. Zu diesem Zweck werden die Kunststoffvorformlinge mit einer Transporteinrichtung 54 transportiert und mit einer Vielzahl von Erwärmungseinrichtungen 52 erwärmt. Diese Erwärmungseinrichtungen sind bevorzugt stationär angeordnet.

Anschließend werden die Kunststoffvorformlinge 10 mittels einer Zuführeinrichtung, wie etwa eines Transportsterns 32 an die eigentliche Umformungseinrichtung 1 übergeben. Diese Umformungseinrichtung 1 weist einen drehbaren Träger 12 auf, an dem eine Vielzahl von Umformungsstationen 2 angeordnet ist. Jede dieser Umformungsstationen weist dabei eine Beaufschlagungseinrichtung 22 auf, wie etwa eine Blasdüse, welche an die Mündungen der Kunststoffvorformlinge anlegbar ist, um diese Druckluft zu beaufschlagen und so zu expandieren.

Weiterhin weist jede Umformungsstation 2 eine Blasform 8 auf, innerhalb derer die Kunststoffvorformlinge zu den Kunststoffbehältnissen expandiert werden.

Weiterhin weisen die Umformungsstationen 2 jeweils Ventileinrichtungen 6 auf, wie etwa Ventilblöcke auf, welche üblicherweise mehrere Ventile aufweisen, um die Kunststoffvorformlinge mit mehreren Druckstufen zu beaufschlagen, wie etwa einem Vorblasdruck, einem Zwischenblasdruck und dergleichen.

Das Bezugszeichen 14 bezieht sich auf ein Druckluftreservoir wie insbesondere aber nicht ausschließlich einen Ringkanal, der die einzelnen Umformungsstationen 2 mit Druckluft versorgen kann.

Das Bezugszeichen 4 kennzeichnet in seiner Gesamtheit eine Druckversorgungseinrichtung bzw. eine Druckluftversorgungseinrichtung, die hier stationär angeordnet ist. Diese Druckluftversorgungseinrichtung kann insbesondere aber nicht ausschließlich das Druckluftreservoir 14 mit Druckluft versorgen.

Die Druckluft von der Druckluftversorgungseinrichtung 4 kann über einen Drehverteiler 7 auf die einzelnen Umformungsstationen 2 verteilt werden. Die Druckluftversorgungseinrichtung 4 kann etwa an einer Luftdruckquelle wie einem Kompressor angeschlossen sein.

Figur 2 zeigt eine Druckversorgungseinrichtung in einer ersten Ausgestaltung. Diese weist eine Be- und Entlüftungseinheit 42 auf, welcher über einen Zulauf 72 Druckluft zugeführt werden kann und welche über einen Anschluss 74 bzw. eine Ableitung 74 die Druckluft an die eigentliche Vorrichtung zum Umformen der Kunststoffvorformlinge zu Kunststoffbehältnissen abgeben kann.

Zusätzlich weist diese Druckluftversorgungseinrichtung hier zwei Filtereinrichtungen 44 und 46 auf, wobei diese Filtereinrichtungen als Reinfilter unterschiedlicher Größe ausgebildet sein können. Diese beiden Filtereinrichtungen 44 und 46 können dabei alternativ Einsatz finden.

Das Bezugszeichen 48 kennzeichnet eine Vebrauchsmesseinrichtung, welche den Druckluftverbrauch messen kann. Diese Verbrauchsmessung kann hier ebenfalls in die modulare Druckluftversorgungseinheit bzw. das modulare Luftwandkonzept integriert werden. Insbesondere wird dabei diese Verbrauchsmesseinrichtung 48 in den Primäranschluss der Druckluftversorgungseinrichtung integriert.

Es ist dabei auch möglich, dass die Vebrauchsmesseinrichtung in unterschiedlichen Größen ausgeführt werden kann. Eine erste Größe könnte beispielsweise bis 3100 Nm³/h beispielsweise bei 40 bar reichen und eine zweite Größe bis 6200 Nm³/h beispielsweise bei einem Druck von 40 bar. Daneben ist aber auch eine spätere Umrüstung auf höhere Volumenströme jederzeit möglich. Die Druckluftversorgungseinrichtung weist daher bevorzugt Anschlussmittel bzw. Anschlüsse auf, um unterschiedliche Verbrauchsmesseinrichtungen integrieren zu können.

Es wird dabei darauf hingewiesen, dass die beiden Feinfilter unterschiedlicher Größe 44 und 46 auch gegeneinander ausgetauscht werden können, um so die Maschinen an unterschiedliche Volumenströme anzupassen. Auf diese Weise wird, wie oben erwähnt, die unterschiedliche Einsetzbarkeit der Druckversorgungseinrichtung erhöht.

Bei der in Figur 3 gezeigten Ausgestaltung sind hier auch zwei unterschiedliche Aktivkohle- und Staubfilter 84 und 86 vorgesehen. Auch hier sind diese Filter in unterschiedlicher Größe vorgesehen und können an den jeweiligen Bedarf der Maschine angepasst werden.

Die Bezugszeichen 88 und 90 kennzeichnen zwei Vorfilter, die hier ebenfalls für unterschiedliche Größen ausgestaltet werden können. Damit kann auch hier die Vorrichtung schnell auf unterschiedliche Verbrauchkriterien angepasst werden. Auch diese beiden Vorfilter 88 und 90 sind alternativ einsetzbar.

Es ist dabei möglich, dass der von den Zuleitungen 72 kommende Luftstrom sämtliche dieser genannten Filter durchläuft. Man erkennt auch, dass hier insbesondere die Aktivkohle- und Staubfilter in ein bestehendes Konzept integriert werden können. Damit erkennt man weiterhin, dass die Druckluftversorgungseinrichtung durch unterschiedliche Module hier mit den Bezugszeichen M1 und M2 ergänzt werden kann.

So bezeichnet hier das Modul M1 ein Modul, welches Aktivkohlefilter und Staubfilter in unterschiedlichen Größen aufweisen kann. Das Bezugszeichen M2 kennzeichnet ein Modul, welches hier zwei Vorfilter in unterschiedlichen Größen aufweisen kann und dazu einen Kondensatabscheider 92. Es wird jedoch darauf hingewiesen, dass dieser Kondensatabscheider auch an anderen Modulen angesetzt werden kann.

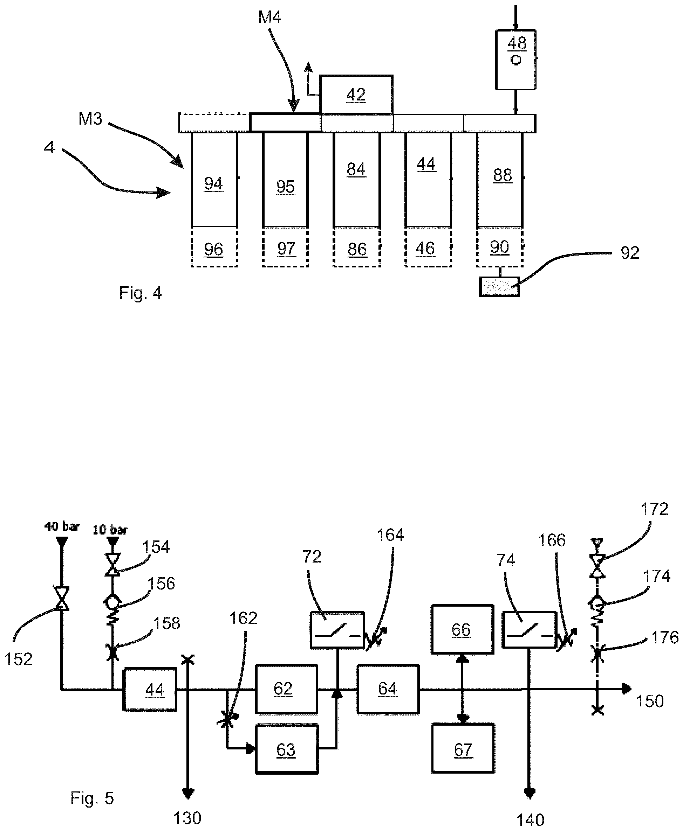

Bei der in Figur 4 gezeigten Ausführungsform ist die Druckluftversorgungseinrichtung und zwei weitere Module M3 und M4 erweitert. Das Modul M3 weist dabei hier zwei Sterilfilter 94 und optional 96 in unterschiedlicher Größe auf. Auch das Modul M4 weist zwei Sterilfilter 95 und 97 auf.

Besonders bevorzugt sind allgemein die Sterilfilter 94 - 97 stromabwärts bezüglich Be- und Entlüftungseinheit 42 angeordnet. Dies ist vorteilhaft in wenn die Be- und Entlüftungseinheit nicht steril ausführbar ist.

Figur 5 zeigt ein Funktionsschema für eine Druckluftversorgungseinrichtung. Dabei sind hier zwei Druckluftzuführungseinrichtungen vorgesehen, die beispielsweise eine Druckluft von 40 bar und 10 bar zur Verfügung stellen können. Die Druckluft kann beispielsweise von Kompressoren erzeugt werden. Die Bezugszeichen 152 und 154 bezeichnen hier manuelle Absperrhähne, die für diese beiden Druckluftzuführungen dienen. Das Bezugszeichen 156 kennzeichnet ein Rückschlagventil, welches verhindert, dass Druckluft aus der 40 bar Leitung in die 10 bar Leitung gepresst werden kann.

Das Bezugszeichen 158 kennzeichnet eine Drosseleinrichtung, genauer gesagt hier eine Festblendeneinrichtung.

An diese Druckluftzuführung schließt sich eine erste Filtereinheit 44 an. An diese erste Filtereinrichtung kann sich ein Niederdruckanschluss anschließen, der beispielsweise Dauerluft zur Verfügung stellen kann, welche beispielsweise zum Schalten von pneumatischen Ventilen dienen kann.

Das Bezugszeichen 162 kennzeichnet eine Drosseleinrichtung und insbesondere eine einstellbare Drossel oder auch eine Festblende, welche bevorzugt für eine Softstartfunktion dient.

Die Bezugszeichen 62 und 63 kennzeichnen Ventile und insbesondere kennzeichnet das Bezugszeichen 62 ein 2/2 Wegeventil und das Bezugszeichen 63 ein 3/2 Wegeventil, welches für die Softstartfunktion dient. Dieses Ventil ist in seiner Grundstellung geschlossen (NC: normally closed). Das Bezugszeichen 72 kennzeichnet einen Druckschalter, der hier zum Überwachen der Ventileinrichtungen 62 und 63 dient. Dieser kann analog oder digital ausgeführt sein und kann auch Initiatoren oder allgemein Sensoreinrichtungen aufweisen, welche Stellungsabfragen der Ventile 62 und 63 ermöglichen.

Das Bezugszeichen 64 kennzeichnet eine weitere Ventileinrichtung, hier insbesondere ein 2/2 Wegeventil zum Sperren der NC.

Die Bezugszeichen 66 und 67 kennzeichnen zwei weitere Ventileinrichtungen, welche hier den Entlüftungsvorgängen dienen.

Das Bezugszeichen 74 kennzeichnet einen Druckschalter, der ebenfalls wieder analog, digital oder mit Initiatoren bzw. allgemein Sensoreinrichtungen ausgestattet sein kann, um Stellungsanfragen an die Ventile 64, 66 und 67 zu richten. Entsprechend kennzeichnet das Bezugszeichen 140 einen zweiten Niederdruckanschluss, der jedoch hier aktiv wegschaltbar ist.

Das Bezugszeichen 150 kennzeichnet den Hauptdruckanschluss, der den Hochdruck an die Vorrichtung zum Umformen von Kunststoffvorformlingen zu Kunststoffbehältnissen liefert.

Die Bezugszeichen 172, 174 und 176 können Bestandteile eines alternativen Niederdruckanschlusses sein, über den beispielsweise Dauerluft zur Verfügung gestellt werden kann.

Dabei kennzeichnet das Bezugszeichen 172 wiederum einen manuellen Absperrhahn, das Bezugszeichen 174 ein Rückschlagventil und das Bezugszeichen 176 ebenfalls wieder eine Drosseleinrichtung oder eine Festblende.

### Bezugszeichenliste

- 2: Umformungsstationen
- 4: Druckversorgungseinrichtung
- 7: Drehverteiler
- 7a: Anschlussbereich der Module
- 9: Druckluftversorgungseinrichtungen
- 10: Kunststoffvorformlinge
- 12: drehbarer Träger
- 20: Kunststoffbehältnisse
- 22: Beaufschlagungseinrichtung
- 32: Transportstern
- 42: Be- und Entlüftungseinheit
- 44: Filtereinrichtung
- 46: Filtereinrichtung
- 48: Verbrauchsmesseinrichtung
- 50: Erwärmungseinrichtung
- 52: Erwärmungseinrichtungen
- 54: Transporteinrichtung
- 62: Ventileinrichtung
- 63: Ventileinrichtung
- 64: Ventileinrichtung
- 66: Ventileinrichtung
- 67: Ventileinrichtung
- 72: Zulauf, Zuführleitung, Druckschalter
- 74: Anschluss, Druckschalter, Abführleitung, Zuführleitung
- 84: Aktivkohlerfilter
- 86: Staubfilter
- 88: Vorfilter
- 90: Vorfilter
- 92: Kondensatabscheider
- 94: Sterilfilter
- 95: Sterilfilter
- 96: Sterilfilter
- 97: Sterilfilter
- 140: Niederdruckanschluss
- 150: Hauptdruckanschluss
- 152: Absperrhahn
- 154: Absperrhahn
- 156: Rückschlagventil
- 158: Drosseleinrichtung
- 162: Drosseleinrichtung
- 172: manueller Absperrhahn
- 174: Rückschlagventil
- 176: Drosseleinrichtung, Festblende
- M1, M4: Modul

## Patentansprüche

1. Vorrichtung zum Umformen von Kunststoffvorformlingen (10) zu Kunststoffbehältnissen (20) mit wenigstens einer Umformungsstation (2), welche eine Blasform aufweist, innerhalb derer die Kunststoffvorformlinge (10) durch Beaufschlagung mit einem fließfähigen Medium zu den Kunststoffbehältnissen (20) umformbar sind, und mit einer Beaufschlagungseinrichtung (22) welche die Kunststoffvorformlinge mit dem fließfähigen Medium beaufschlagt, wobei die Vorrichtung eine Druckluftversorgungseinrichtung (4) aufweist, welche das fließfähige Medium zur Verfügung stellt und diese Druckluftversorgungseinrichtung (4) stationär angeordnet ist, wobei die Druckluftversorgungseinrichtung (4) als eine modular aufgebaute Einrichtung aufgebaut ist, welche eine Be- und/oder Entlüftungseinrichtung (42) für Hochdruckluft aufweist,
wobei diese modular aufgebaute Einrichtung je nach Anwendung mit weiteren Versorgungskomponenten bestückbar ist,
wobei es sich bei der Beaufschlagungseinrichtung um eine Blasdüse handelt, wobei die Vorrichtung einen bewegbaren Träger aufweist, an dem die Umformungsstation angeordnet ist,
**dadurch gekennzeichnet, dass**
diese Versorgungskomponenten aus einer Gruppe von Komponenten ausgewählt sind, welche Filtereinrichtungen aufweist.

2. Vorrichtung (1) nach Anspruch 1,
**dadurch gekennzeichnet, dass**
die Vorrichtung einen drehbaren Träger aufweist, an dem die Umformungsstation angeordnet ist.

3. Vorrichtung (1) nach wenigstens einem der vorangegangenen Ansprüche,
**dadurch gekennzeichnet, dass**
dass diese Versorgungskomponenten aus einer Gruppe von Komponenten ausgewählt sind, welche Feinfiltereinrichtungen, Aktivkohlefiltereinrichtungen, Staubfiltereinrichtungen, Kondensatabscheider, Vorfiltereinrichtungen, Sterilfiltereinrichtungen aufweist.

4. Vorrichtung (1) nach wenigstens einem der vorangegangenen Ansprüche,
**dadurch gekennzeichnet, dass**
in die Be- und/oder Entlüftungseinrichtung (42) eine Filtrationseinrichtung (44, 46) integriert ist und/oder eine Filtrationseinrichtung (44, 46) an die Be- und/oder Entlüftungseinrichtung (42) montierbar ist.

5. Vorrichtung (1) nach wenigstens einem der vorangegangenen Ansprüche,
**dadurch gekennzeichnet, dass**
die Vorrichtung (1) wenigstens eine erste Filtereinrichtung (44) und eine zweite Filtereinrichtung (84, 94, 88) aufweist.

6. Vorrichtung (1) nach wenigstens einem der vorangegangenen Ansprüche,
**dadurch gekennzeichnet, dass**
die Druckluftversorgungseinrichtung (4) eine Niederdruckluftversorgungseinheit aufweist.

7. Vorrichtung (1) nach dem vorangegangenen Anspruch,
**dadurch gekennzeichnet, dass**
die Niederdruckluftversorgungseinheit aktivierbar und deaktivierbar ist.

8. Vorrichtung (1) nach wenigstens einem der vorangegangenen Ansprüche,
**dadurch gekennzeichnet, dass**
die Druckluftversorgungseinrichtung (4) eine Vielzahl von Luftventileinrichtungen (62, 64, 66, 68) aufweist und diese Luftventileinrichtungen (62, 64, 66, 68) bevorzugt aus einer Gruppe von Ventileinrichtungen ausgewählt sind, welche Kolbenschieberventile, Sitzventile, Kugelhahnventile und dergleichen enthält.

9. Vorrichtung nach dem vorangegangenen Anspruch,
**dadurch gekennzeichnet, dass**
die Vorrichtung eine Überwachungseinrichtung zum Überwachen der Luftventileinrichtungen aufweist.

## Claims

1. Apparatus for forming plastic preforms (10) into plastic containers (20), having at least one forming station (2) which has a blow mold, within which the plastic preforms (10) can be formed into the plastic containers (20) by being acted upon by a flowable medium, and having an application device (22) which applies the plastic preforms with the flowable medium, wherein the apparatus has a compressed air supply device (4) which provides the flowable medium and this compressed air supply device (4) is arranged in a stationary manner, wherein the compressed air supply device (4) is constructed as a modular device which has an aeration and/or venting device (42) for high pressure,
wherein this modular device can be equipped with additional supply components depending on the application,
wherein the application device is a blowing nozzle, wherein the apparatus having a movable carrier on which the forming station is arranged,
**characterized in that**
these supply components are selected from a group of components comprising filter devices.

2. Apparatus (1) according to claim 1,
**characterized in that**
the apparatus has a rotatable carrier on which the forming station is arranged.

3. Apparatus (1) according to at least one of the preceding claims,
**characterized in that**
that these supply components are selected from a group of components comprising fine filter devices, activated carbon filter devices, dust filter devices, condensate separators, pre-filter devices, sterile filter devices.

4. Apparatus (1) according to at least one of the preceding claims,
**characterized in that**
a filtration device (44, 46) is integrated into the aeration and/or venting device (42) and/or a filtration device (44, 46) can be mounted on the aeration and/or venting device (42).

5. Apparatus (1) according to at least one of the preceding claims,
**characterized in that**
the apparatus (1) has at least one first filter device (44) and a second filter device (84, 94, 88).

6. Apparatus (1) according to at least one of the preceding claims,
**characterized in that**
the compressed air supply device (4) has a low-pressure air supply unit.

7. Apparatus (1) according to the preceding claim,
**characterized in that**
the low-pressure air supply unit can be activated and deactivated.

8. Apparatus (1) according to at least one of the preceding claims,
**characterized in that**
the compressed air supply device (4) comprises a plurality of air valve devices (62, 64, 66, 68) and said air valve devices (62, 64, 66, 68) are preferably selected from a group of valve devices including piston spool valves, seat valves, ball valves and the like.

9. Apparatus according to the preceding claim,
**characterized in that**
the apparatus has a monitoring device for monitoring the air valve devices.

## Revendications

1. Dispositif de formage de préformes en matière plastique (10) en récipients en matière plastique (20) avec au moins un poste de formage (2) qui présente un moule de soufflage, à l'intérieur duquel les préformes en matière plastique (10) peuvent être formées par alimentation en un milieu coulant en récipients en matière plastique (20), et avec un dispositif d'alimentation (22) qui alimente les préformes en matière plastique en milieu coulant, dans lequel le dispositif présente un dispositif d'alimentation en air comprimé (4) qui met à disposition le milieu coulant et ce dispositif d'alimentation en air comprimé (4) est agencé de manière stationnaire, dans lequel le dispositif d'alimentation en air comprimé (4) est constitué comme un dispositif constitué de manière modulaire qui présente un dispositif de ventilation et/ou de désaération (42) pour de l'air comprimé à haute pression,
dans lequel ce dispositif constitué de manière modulaire peut être équipé selon l'application d'autres composants d'alimentation,
dans lequel il s'agit pour le dispositif d'alimentation d'une buse de soufflage, dans lequel le dispositif présente un support mobile, au niveau duquel le poste de formage est agencé,
**caractérisé en ce que**
ces composants d'alimentation sont sélectionnés à partir d'un groupe de composants qui présente des dispositifs à filtre.

2. Dispositif (1) selon la revendication 1,
**caractérisé en ce que**
le dispositif présente un support rotatif, au niveau duquel le poste de formage est agencé.

3. Dispositif (1) selon au moins l'une quelconque des revendications précédentes,
**caractérisé en ce que**
ces composants d'alimentation sont sélectionnés à partir d'un groupe de composants qui présente des dispositifs à filtre fin, des dispositifs à filtre à charbon actif, des dispositifs à filtre antipoussières, des séparateurs de condensat, des dispositifs à préfiltre, des dispositifs à filtre stérile.

4. Dispositif (1) selon au moins l'une quelconque des revendications précédentes,
**caractérisé en ce que**
un dispositif de filtration (44, 46) est intégré dans le dispositif de ventilation et/ou de désaération (42) et/ou un dispositif de filtration (44, 46) peut être monté au niveau du dispositif de ventilation et/ou de désaération (42).

5. Dispositif (1) selon au moins l'une quelconque des revendications précédentes,
**caractérisé en ce que**
le dispositif (1) présente au moins un premier dispositif à filtre (44) et un second dispositif à filtre (84, 94, 88).

6. Dispositif (1) selon au moins l'une quelconque des revendications précédentes,
**caractérisé en ce que**
le dispositif d'alimentation en air comprimé (4) présente une unité d'alimentation en air comprimé à basse pression.

7. Dispositif (1) selon la revendication précédente,
**caractérisé en ce que**
l'unité d'alimentation en air comprimé à basse pression peut être activée et désactivée.

8. Dispositif (1) selon au moins l'une quelconque des revendications précédentes,
**caractérisé en ce que**
le dispositif d'alimentation en air comprimé (4) présente une pluralité de dispositifs à soupape à air (62, 64, 66, 68) et ces dispositifs à soupape à air (62, 64, 66, 68) sont de préférence sélectionnés à partir d'un groupe de dispositifs à soupape qui contient des soupapes à robinet à piston, des soupapes à siège, des soupapes à robinet à boisseau sphérique et similaires.

9. Dispositif selon la revendication précédente,
**caractérisé en ce que**
le dispositif présente un dispositif de surveillance pour la surveillance des dispositifs à soupape à air.
